# EUROPEAN PATENT APPLICATION

(11) **EP 3 578 994 A1**
(43) Date of publication of application: **11.12.2019**
(21) Application number: 19178093.1
(22) Date of filing: 04.06.2019
(51) Int. Cl.: G01N 35/00, G01N 35/10

(54) **AUTOMATIC ANALYZER**

(30) Priority: 05.06.2018 JP 2018107444
(71) Applicant: Jeol Ltd., Akishima-shi, Tokyo 196-8558 (JP)
(72) Inventor: ASAKURA, Makoto, Akishima, Tokyo 196-8558 (JP)
(74) Representative: Boult Wade Tennant LLP

(57) **Abstract**

It is an object to provide an automatic analyzer (1) including a sample dilution mechanism, particularly, an automatic analyzer capable of avoiding a carryover through a dilution container (8).

The automatic analyzer (1) according to the present invention includes an avoidance information storage unit (34) configured to store avoidance information including a condition requiring carryover avoidance for the pretreatment container (8), an avoidance determination unit (32) configured to determine whether or not the avoidance is necessary, based on information of samples dispensed before and after to the pretreatment container (8) in which the sample dispensing nozzle is to dispense the sample, and the avoidance information to generate a command, and an avoidance control unit (27) configured to control the sample dispensing nozzle so that the sample dispensing nozzle defers the dispensing of the sample to the pretreatment container (8), based on the avoidance command from the avoidance determination unit (32).

## Description

### BACKGROUND

### Technical Field

The present invention relates to an automatic analyzer that analyzes components contained in a sample such as blood and urine.

### Related Art

In an automatic analyzer, a sample such as blood or urine and a reagent are dispensed into a reaction container, the sample and the reagent react in the reaction container, and absorbance of a reaction solution is measured, thereby analyzing a specific component (hereinafter, referred to as a test item) contained in the sample.

In general, the automatic analyzer has a reaction container cleaning mechanism that cleans the reaction container by repeating discharge and suction of a cleaning liquid such as water and a detergent, and the reaction container containing the reaction solution for which the measurement of absorbance has been completed is cleaned by the reaction container cleaning mechanism and reused.

As described above, the automatic analyzer in which the reaction container is automatically cleaned and reused has a lower running cost than the automatic analyzer using a disposable reaction container, while if the cleaning of the reaction container is insufficient, the sample, reagent, or reaction solution used in the previous analysis is carried over, which in turn may adversely affect an analysis result value of the sample using the reaction container later. A phenomenon in which the sample, the reagent, the reaction solution, etc. are carried over is generally called a carryover.

When the reaction container in which the analysis of a sample (strong positive sample) where the analysis result value of a certain test item is extremely high is next used for the analysis of a sample (normal sample) where the analysis result value of the test item is within a reference range, the strong positive sample itself or the reaction solution of the strong positive sample is carried over to the analysis of the normal sample to be analyzed next without being sufficiently cleaned by the normal cleaning by the reaction container cleaning mechanism, and the analysis result value of the normal sample may be higher than an original value.

In recent years, however, the types of sample materials (serum, plasma, urine, etc.) to be analyzed by such an automatic analyzer are increasing, and among the test items, there is a large difference in a concentration of a contained component depending on the type of sample material.

For such test items, even when the reaction container used for analysis of a sample material having the contained concentration (providing a high analysis result value) is next used for analysis of a sample material having a low contained concentration (providing a low analysis result value), the carryover can occur.

In order to solve the problems as described above, recent automatic analyzers have a function capable of avoiding the carryover through the reaction container.

In JP 5-172828 A, an automatic analyzer is proposed for storing in advance a combination of test items where a carryover may occur, storing test items previously analyzed in a reaction container as a history, and controlling transfer of the reaction container such that a combination of test items analyzed before and after in the reaction container uses the reaction container that does not correspond to the combination of test items where the carryover may occur when a new analysis is performed.

### SUMMARY

Some automatic analyzers have a sample dilution mechanism (an example of a sample pretreatment mechanism) that pretreats a dilution of a sample before the sample is dispensed into a reaction container. In general, the sample dilution mechanism includes a dilution container (an example of a pretreatment container) containing both a sample dispensed by the sample dispensing mechanism and a dilution solution (an example of a pretreatment liquid), a dilution sample dispensing mechanism (an example of a pretreatment sample dispensing mechanism) that dispenses a diluted sample (the dilution sample) from a dilution container to the reaction container, and a dilution container cleaning mechanism (an example of a pretreatment container cleaning mechanism) that cleans the dilution container containing the dilution sample remaining after an analysis is completed, and the dilution container is repeatedly used.

In the automatic analyzer including such a sample dilution mechanism, since the dilution container is repeatedly used in addition to the reaction container, there is a risk that not only a carryover through the reaction container but also a carryover through the dilution container may occur.

However, the automatic analyzer described in JP 5-172828 A is not assumed to have the sample dilution mechanism, and JP 5-172828 A does not specifically describe a method for avoiding the carryover through the dilution container.

It is an object to provide an automatic analyzer including a sample dilution mechanism, particularly, an automatic analyzer capable of avoiding a carryover through a dilution container.

An automatic analyzer including a sample table configured to hold a plurality of sample containers containing a sample, a pretreatment table configured to hold a plurality of pretreatment containers containing a pretreatment sample obtained by subjecting the sample to pretreatment, a reaction table configured to hold a plurality of reaction containers in which the pretreatment sample and a reagent are reacted, reagent tables configured to hold a plurality of reagent containers containing the reagent, a sample dispensing nozzle configured to transfer the sample from the sample container held by the sample table to the pretreatment container held by the pretreatment table, a pretreatment sample dispensing nozzle configured to transfer the pretreatment sample from the pretreatment container held by the pretreatment table to the reaction container held by the reaction table, and a reagent dispensing nozzle configured to transfer the reagent from the reagent tables to the reaction tables, and subjecting the sample to pretreatment in the pretreatment container and reacting the obtained pretreatment sample with the reagent in the reaction container to analyze components in the sample, includes: an avoidance information storage unit configured to store avoidance information including a condition requiring carryover avoidance for the pretreatment container; a pretreatment container usage history storage unit configured to store information including the type of sample material and the type of test item requested to be analyzed, regarding a sample dispensed in the past to the pretreatment container; an analysis request information storage unit configured to store information including the type of sample material and the type of test item requested to be analyzed, regarding a sample newly requested to be analyzed; an avoidance determination unit configured to determine whether or not the avoidance is necessary, based on information on samples dispensed before and after to the pretreatment container in which the sample dispensing nozzle is to dispense the sample, stored in the pretreatment container usage history storage unit and the analysis request information storage unit, and the avoidance information to generate a command; and an avoidance control unit configured to control the sample dispensing nozzle so that the sample dispensing nozzle defers the dispensing of the sample to the pretreatment container, based on the avoidance command from the avoidance determination unit.

### BRIEF DESCRIPTION OF DRAWINGS

FIG. 1 is a schematic configuration view of an automatic analyzer according to an embodiment of the present invention;
FIG. 2 is a schematic view of a dispensing nozzle cleaning mechanism according to an embodiment of the present invention;
FIG. 3 is a flowchart for describing an operation when a carryover through a dilution container is avoided, according to a first embodiment of the present invention;
FIG. 4 is a display example of a carryover avoidance setting screen according to the first embodiment of the present invention;
FIG. 5 is a flowchart for describing an operation when a carryover through a dilution container is avoided, according to a second embodiment of the present invention;
FIG. 6 is a display example of a carryover avoidance setting screen according to the second embodiment of the present invention;
FIG. 7 is a display example of a carryover avoidance setting screen according to a third embodiment of the present invention; and
FIG. 8 is a part of a flowchart for describing an operation when a carryover through a dilution container is avoided in consideration of cleaning history information of the dilution container according to a fourth embodiment of the present invention.

### DETAILED DESCRIPTION

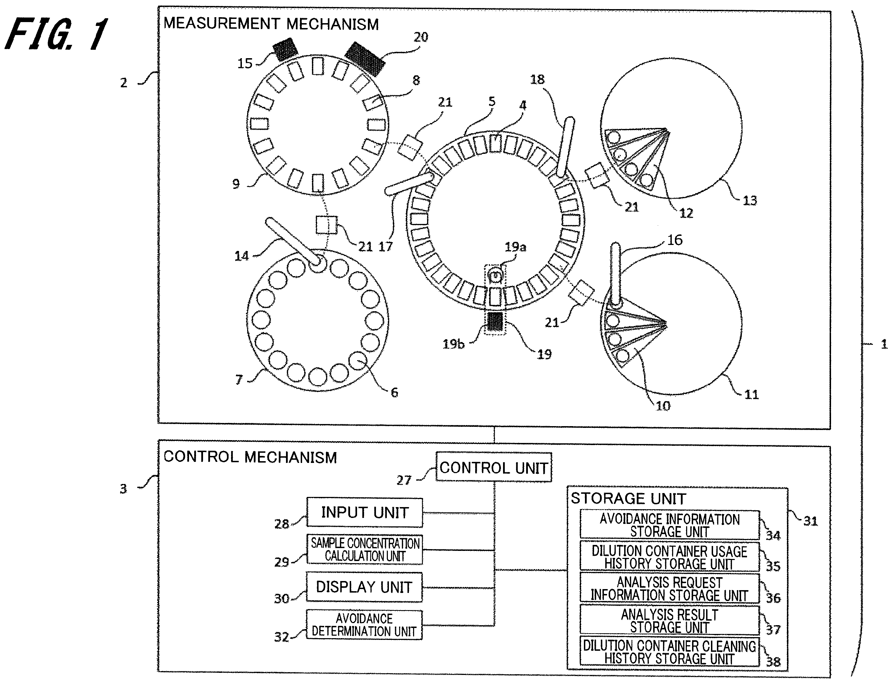

Embodiments of the present invention will be hereinafter described with reference to FIGS. 1 to 8. In the present specification and the drawings, the same reference numerals are given to components that indicate substantially the same components and functions, and redundant description will be omitted.

### <Configuration of Automatic Analyzer>

FIG. 1 is a schematic configuration view of an automatic analyzer 1 according to an embodiment of the present invention.

As shown in FIG. 1, the automatic analyzer 1 is divided into a measurement mechanism 2 that reacts a sample collected from an examinee with a reagent to measure absorbance of a reaction solution, and a control mechanism 3 that controls an operation of each unit of the measurement mechanism 2 in units of a predetermined constant cycle time.

### (Measurement Mechanism 2)

The measurement mechanism 2 is configured so that a sample turntable 7 (an example of a sample table) for transferring a sample container 6 containing the sample, a dilution turntable 9 (an example of a pretreatment table) for transferring a dilution container 8 containing a dilution sample, a first reagent turntable 11 (an example of a reagent table) for transferring a first reagent container 10 containing a first reagent, and a second reagent turntable 13 (an example of a reagent table) for transferring a second reagent container 12 containing a second reagent are disposed around a reaction turntable 5, respectively, with the reaction turntable 5 (an example of a reaction table) for transferring the reaction container 4 for reacting the sample with the reagent as a center, and four dispensing mechanisms described later for transferring the sample, the dilution sample, the first reagent, and the second reagent between the respective turntables are further disposed between the respective tables.

The reaction turntable 5 disposed at the center repeats rotation and stop at a predetermined angle at a constant cycle (e.g., 3 second cycle), and the dispensing mechanisms and the turntables around the reaction turntable 5 also operate in their own 3 second cycle according to the cycle so that operations such as dispensing can be performed on the reaction container 4 on the reaction turntable 5.

The sample dispensing mechanism 14 disposed between the sample turntable 7 and the dilution turntable 9 sucks the sample into a sample dispensing nozzle (not shown) provided in the sample dispensing mechanism 14 from the sample container 6 which is transferred to a suction position as the sample turntable 7 rotates, and discharges the sucked sample and the dilution solution supplied by the sample dispensing mechanism 14 itself to an empty dilution container 8 which is transferred to a discharging position as the dilution turntable 9 rotates.

The dilution container 8 from which the dilution solution and the sample are discharged stops at a position of the dilution and stirring mechanism 15 disposed around the dilution turntable 9 in a next cycle, and the dilution and stirring mechanism 15 inserts a stirrer (not shown) into the dilution container 8 containing the sample and the dilution solution and rotates the stirrer to stir the sample and the dilution solution therein. In this manner, in the dilution container 8, the sample is diluted to a predetermined multiple concentration, and a diluted sample is prepared. After stirring the diluted sample, the stirrer is cleaned by a stirrer cleaning mechanism (not shown) disposed in the vicinity of the dilution and stirring mechanism 15.

In the same cycle as the cycle in which the diluted sample is stirred by the dilution and stirring mechanism 15, the first reagent dispensing mechanism 16 disposed between the first reagent turntable 11 and the reaction turntable 5 sucks the first reagent into a first reagent dispensing nozzle (not shown) provided in the first reagent dispensing mechanism 16 from the first reagent container 10 which is transferred to a suction position as the first reagent turntable 11 rotates, and discharges the sucked first reagent to an empty reaction container 4 transferred to a discharging position as the reaction turntable 5 rotates.

The dilution sample dispensing mechanism 17 disposed between the dilution turntable 9 and the reaction turntable 5 sucks the diluted sample stirred by the dilution and stirring mechanism 15 into a dilution sample dispensing nozzle (an example of a pretreatment sample dispensing nozzle) (not shown) provided in the dilution sample dispensing mechanism 17 from the dilution container 8 which is transferred to a suction position as the dilution turntable 9 rotates, and discharges the sucked dilution sample to the reaction container 4 transferred to the discharging position as the reaction turntable 5 rotates and with the first reagent being already dispensed.

After the first reagent and the dilution sample preliminarily react in the reaction container 4, the second reagent dispensing mechanism 18 disposed between the second reagent turntable 13 and the reaction turntable 5 sucks the second reagent into a second reagent dispensing nozzle (not shown) provided in the second reagent dispensing mechanism 18 from the second reagent container 12 which is transferred to a suction position as the second reagent turntable 13 rotates, and discharges the sucked second reagent to the reaction container 4 containing a reaction solution of the first reagent and the dilution sample transferred to the discharging position as the reaction turntable 5 rotates. Thus, a main reaction is started in the reaction container 4.

The reaction container 4 containing the reaction solution of the dilution sample and the reagent passes through a photometry mechanism 19 disposed around the reaction turntable 5 at a constant cycle by the rotation of the reaction turntable 5. The photometry mechanism 19 includes a light source lamp 19a for irradiating the reaction container 4 with light, and a multi-wavelength photometer 19b for measuring the absorbance of the inside of the reaction container 4 irradiated with the light, and the multi-wavelength photometer 19b measures the absorbance of the inside of the reaction container 4 which passes at a constant cycle, and outputs the absorbance to a control mechanism 3. The control mechanism 3 calculates a concentration of a test item contained in the sample from the absorbance of the reaction solution of the sample and the reagent input from the photometry mechanism 19.

The dilution container cleaning mechanism 20 disposed around the dilution turntable 9 includes a plurality of cleaning liquid discharge nozzles (not shown) for discharging a cleaning liquid such as water or detergent, and a plurality of suction nozzles (not shown) for suctioning the dilution sample or the cleaning liquid, and cleans the dilution container 8 in which the analysis is completed and the dilution sample remains by sucking the dilution sample with the suction nozzles and then repeating the discharge and suction of the cleaning liquid.

The dispensing nozzle cleaning mechanism 21 disposed in the vicinity of the sample dispensing mechanism 14, the first reagent dispensing mechanism 16, the dilution sample dispensing mechanism 17, and the second reagent dispensing mechanism 18 are used to clean a dispensing nozzle (not shown) provided in each dispensing mechanism that dispenses the sample or the reagent.

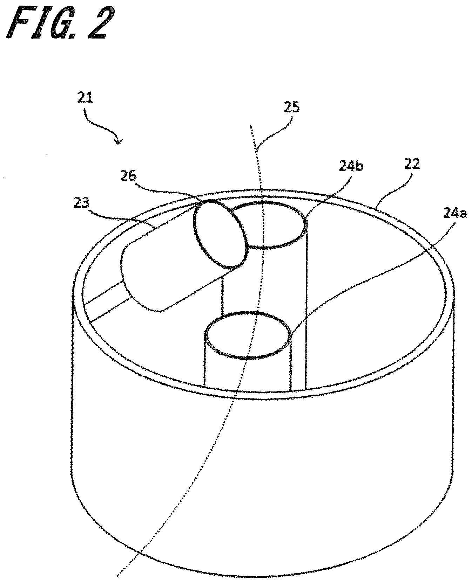

FIG. 2 is a schematic view of a dispensing nozzle cleaning mechanism 21 according to an embodiment of the present invention. As shown in FIG. 2, the dispensing nozzle cleaning mechanism 21 includes a cylinder-shaped cleaning tank 22, a cleaning water supply unit 23 provided on an inner wall side of a side surface of the cleaning tank 22, and two cleaning liquid supply units 24a and 24b provided on an inner wall side of a bottom of the cleaning tank 22. The cleaning liquid supply units 24a and 24b are disposed in parallel along a movement trajectory 25 of the dispensing nozzle.

The cleaning water supply unit 23 is configured to discharge water to an outer wall of the dispensing nozzle transferred to a position facing a discharge port 26 thereof. The cleaning liquid supply units 24a and 24b each have a cylindrical shape, and are configured such that the cleaning liquid such as an alkaline detergent and an acid detergent is spouted from an upper end thereof, and the dispensing nozzles transferred above the respective cleaning solution supply units 24a and 24b can suck the cleaning liquid. In the present specification, it is assumed that the alkaline detergent is spouted from the cleaning liquid supply unit 24a and the acid detergent is spouted from the cleaning liquid supply unit 24b.

### (Control Mechanism 3)

A control mechanism 3 includes a control unit 27 (an example of an avoidance control unit) connected to the measurement mechanism 2, an input unit 28, a sample concentration calculation unit 29, a display unit 30, a storage unit 31, and an avoidance determination unit 32, which are connected to the control unit 27, respectively.

The control unit 27 is constituted by a CPU or the like, and performs a control of an entire automatic analyzer 1 including the respective units of the measurement mechanism 2 and the control mechanism 3, and a control for a carryover avoidance operation of the dilution container 8.

The input unit 28 receives information necessary for analysis of the sample or instruction information of the analysis operation, and outputs the information to the control unit 27. For the input unit 28, a mouse, a keyboard, a touch panel, or the like is used.

The sample concentration calculation unit 29 calculates the concentration of the test item contained in the sample based on information of the absorbance of the reaction solution of the dilution sample and the reagent input from the photometry mechanism 19 via the control unit 27.

The display unit 30 displays the concentration of the test item contained in the sample calculated by the sample concentration calculation unit 29 as an analysis result. In addition, the display unit 30 displays a carryover avoidance setting screen 33 for setting avoidance information including conditions under which a carryover needs to be avoided for the dilution container 8 and an avoidance method. For the display unit 30, a display, a printer, a speaker, or the like is used.

The storage unit 31 is constituted by a large capacity recording device such as a hard disk, and stores information and the like input by the input unit 28. In addition, the storage unit 31 includes an avoidance information storage unit 34 for storing the avoidance information set on the carryover avoidance setting screen 33, a dilution container usage history storage unit 35 (an example of a pretreatment container usage history storage unit) for storing information including the type of sample material and the type of test item requested to be analyzed regarding a sample dispensed in the past into the dilution container 8, an analysis request information storage unit 36 for storing information including the type of sample material and the type of test item requested to be analyzed, regarding a sample newly requested to be analyzed, an analysis result storage unit 37 for storing the concentration of the test item contained in the sample calculated by the sample concentration calculation unit 29 as an analysis result, and a dilution container cleaning history storage unit 38 (an example of a pretreatment container cleaning history storage unit) for storing information on the type of cleaning liquid dispensed in the past into the dilution container 8.

The avoidance determination unit 32 determines whether or not an operation of a carryover avoidance for the dilution container 8 is necessary, based on the information on the samples to be dispensed before and after in the dilution container 8 in which the sample dispensing nozzle is to dispense the sample, and the avoidance information set on the carryover avoidance setting screen 33.

An example of the operation when the automatic analyzer 1 configured as described above avoids the carryover through the dilution container 8 will be shown below.

### <First Embodiment>

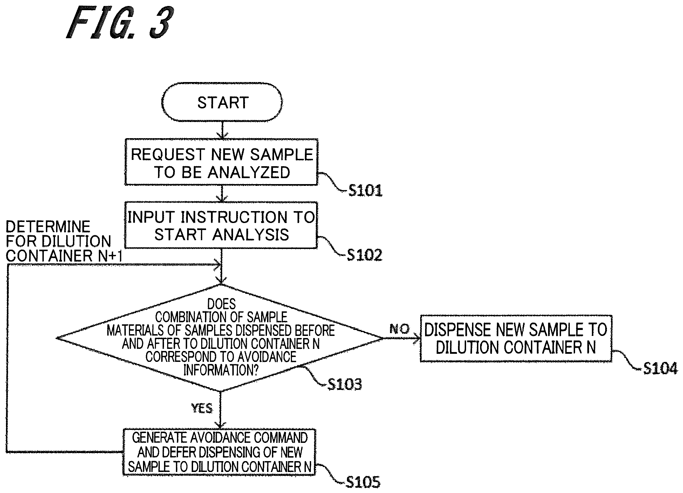

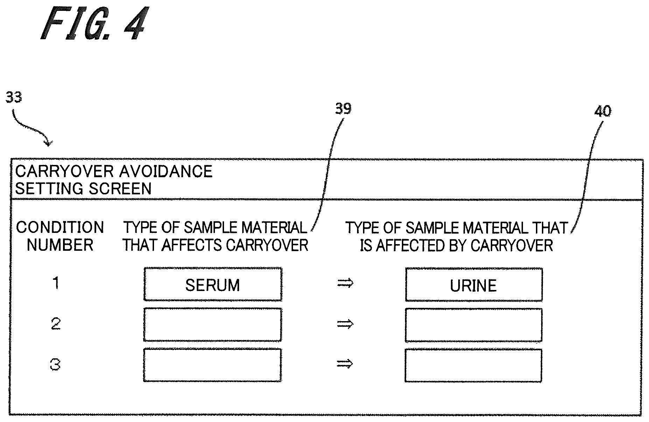

FIG. 3 is a flowchart for describing an operation when a carryover through a dilution container 8 is avoided, according to a first embodiment of the present invention and FIG. 4 is a view showing a display example of a carryover avoidance setting screen 33 according to the first embodiment of the present invention.

The carryover avoidance setting screen 33 shown in FIG. 4 is a screen example for setting a combination of sample materials that can cause carryover as a condition that requires the avoidance of the carryover, and the type of sample material that affects the carryover 39 and the type of sample material that is affected by the carryover 40 in the figure are configured such that one of the types of sample material registered in advance is selected.

Hereinafter, when the sample materials of the samples to be dispensed before and after to the dilution container 8 in which the sample dispensing nozzle is to dispense the sample correspond to the combination of sample materials set as the avoidance information on the carryover avoidance setting screen 33 (in the example of FIG. 4, when an urine sample is to be next dispensed to the dilution container 8 into which a serum sample is dispensed), the carryover avoidance operation performed on the dilution container 8 will be described along the steps shown in FIG. 3.

First, a user requests analysis of a sample to be analyzed (hereinafter referred to as a new sample) (step S101). The request information input by the user is stored in the analysis request information storage unit 36.

Next, the user inputs an instruction to start analysis on the new sample (step S102).

Next, in steps S103 to S105, it is determined whether or not the carryover avoidance operation is necessary for a dilution container N transferred to the discharge position of the sample dispensing mechanism 14. Specifically, it is determined whether or not a combination of a sample material of a sample (hereinafter referred to as a previous sample) previously dispensed to the dilution container N and the sample material of the new sample corresponds to the avoidance information set on the carryover avoidance setting screen 33 (step S103).

That is, the avoidance determination unit 32 reads out information of the sample material of the previous sample of the dilution container N from the dilution container usage history storage unit 35 and information of the sample material of the new sample from the analysis request information storage unit 36, respectively, and determines whether or not the combination of the read sample materials of the samples dispensed before and after to the dilution container N corresponds to the combination of the sample materials set on the carryover avoidance setting screen 33 as the avoidance information.

As a result of the determination, if the combination of the sample materials of the samples dispensed before and after to the dilution container N does not correspond to the avoidance information (No in step S103), the avoidance determination unit 32 determines that the carryover avoidance operation for the dilution container N is unnecessary and the control unit 27 controls the sample dispensing mechanism 14 to dispense the new sample to the dilution container N (step S104).

Meanwhile, as a result of the determination, if the combination of the sample materials of the samples dispensed before and after to the dilution container N corresponds to the avoidance information (Yes in step S103), the avoidance determination unit 32 determines that the carryover avoidance operation for the dilution container N is necessary and generates an avoidance command to the control unit 27. In addition, the control unit 27 controls the sample dispensing mechanism 14 to defer the dispensing of the new sample to the dilution container N (step S105) . That is, in the present cycle, the sample dispensing mechanism 14 does not suck the new sample, and a dilution sample of the new sample is not prepared.

In the case where the dispensing of the new sample to the dilution container N has been deferred in step S105, it is determined whether or not the carryover avoidance operation is performed for a dilution container (N+1) transferred to the discharge position of the sample dispensing mechanism 14 in a next cycle in the same manner as in steps S103 to S105.

Further, the dilution container N for which the dispensing of the new sample is deferred in step S105 continues to move along with the rotation of the dilution turntable 9 while remaining empty, and is cleaned by the dilution container cleaning mechanism 20 after a predetermined time has passed and a turn comes.

According to the first embodiment described above, the combination of the sample material set as the avoidance information on the carryover avoidance setting screen 33 is not dispensed before and after to the same dilution container 8, and the carryover through the dilution container 8 is avoided. In addition, the previous sample which is not used for analysis and remains of the dilution container 8 in which the avoidance command is generated is cleaned by the dilution container cleaning mechanism 20, and the dilution container 8 is cleaned again by the dilution container cleaning mechanism 20 after the dispensing of the new sample is deferred and the dilution container 8 is moved on the dilution turntable 9 while remaining empty, thereby cleaning the dilution container 8 twice in total, and therefore, the previous sample remaining in the dilution container 8 is sufficiently cleaned.

### <Second Embodiment>

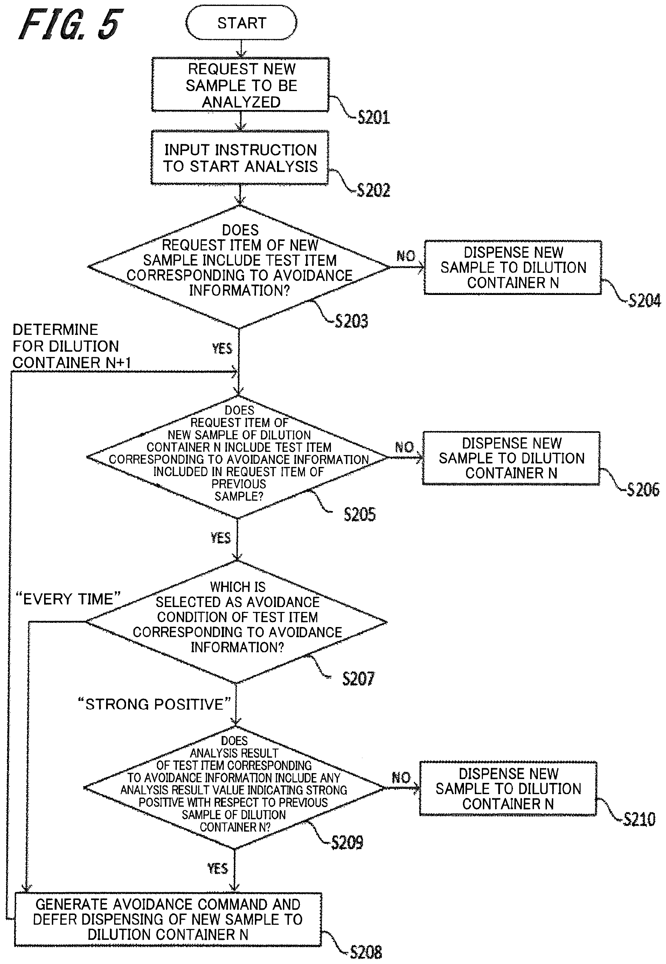

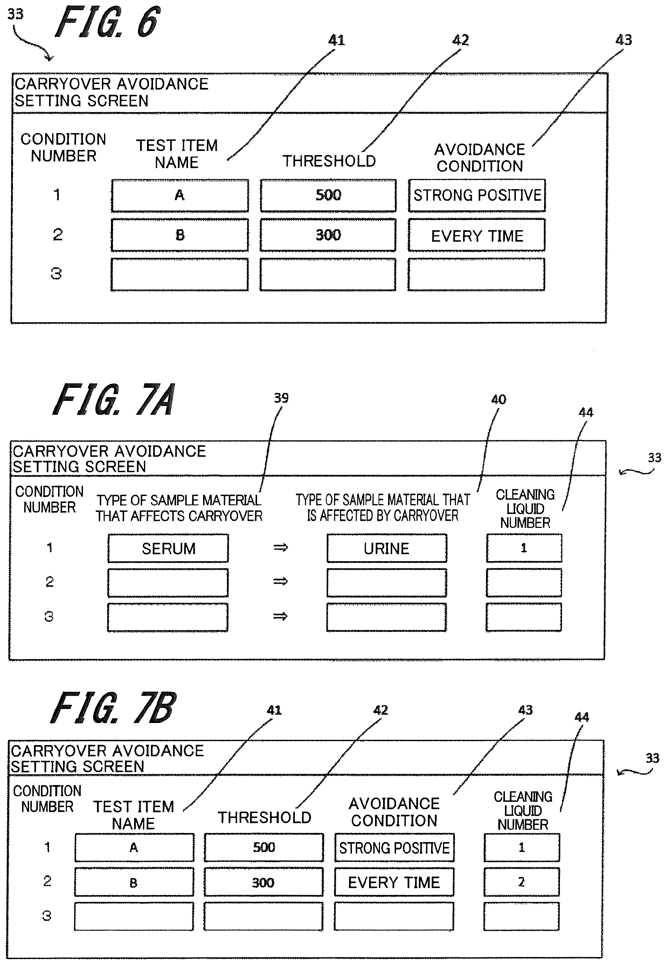

FIG. 5 is a flowchart for describing an operation when a carryover through a dilution container 8 is avoided, according to a second embodiment of the present invention and FIG. 6 is a view showing a display example of a carryover avoidance setting screen 33 according to the second embodiment of the present invention.

The carryover avoidance setting screen 33 shown in FIG. 6 is an example of a screen for setting a test item that may cause a carryover as a condition requiring the avoidance of the carryover, a test item name 41 in the figure is configured such that one of the test items registered in advance is selected, a threshold 42 is configured such that a numerical value for determining whether or not an analysis result value of a corresponding test item is strongly positive is input, and an avoidance condition 43 is configured to select one of "strong positive" or "every time".

When a test item (hereinafter referred to as a request item) that is requested to be analyzed for the samples that are to be dispensed before and after to the dilution container 8 in which the sample dispensing nozzle is to dispense the sample corresponds to the test item set as the avoidance information on the carryover avoidance setting screen 33, if "strong positive" is selected from the avoidance condition 43 corresponding to the corresponding test item, the avoidance operation of the carryover is performed for the dilution container 8 in the case in which the analysis result value of the test item corresponding to the avoidance information of the previous sample of the dilution container 8 exceeds the threshold 42 set as the avoidance information (in the example of FIG. 6, in the case in which an analysis result value of a test item A of the previous sample exceeds 500), and if "every time" is selected from the avoidance condition 43, the avoidance operation of the carryover is performed for the dilution container 8 irrespective of the analysis result value of the test item corresponding to the avoidance information of the previous sample of the dilution container 8.

Hereinafter, when the request item of the samples to be dispensed before and after to the dilution container 8 in which the sample dispensing nozzle is to dispense the sample correspond to the test item set as the avoidance information on the carryover avoidance setting screen 33, an avoidance operation of the carryover performed for the dilution container will be described along the steps shown in FIG. 5.

First, similar to steps S101 and S102 of the first embodiment, the user requests analysis of the new sample (step S201), and inputs an instruction to start analysis on the new sample (step S202).

Next, in steps S203 to S210, it is determined whether or not the carryover avoidance operation is necessary for a dilution container N transferred to the discharge position of the sample dispensing mechanism 14. Specifically, first, it is determined whether or not a test item corresponding to the avoidance information set on the carryover avoidance setting screen 33 is included in the request item of the new sample (step S203) .

That is, the avoidance determination unit 32 reads out information of the request item of the new sample from the analysis request information storage unit 36, and determines whether or not the test item of the new sample includes the test item set as the avoidance information on the carryover avoidance setting screen 33.

As a result of the determination, if the request item of the new sample does not include the test item set as the avoidance information (No in step S203), the avoidance determination unit 32 determines that the carryover avoidance operation for the dilution container N is unnecessary and the control unit 27 controls the sample dispensing mechanism 14 to dispense the new sample to the dilution container N (step S204).

Meanwhile, as the result of the determination, if the request item of the new sample includes the test item set as the avoidance information (Yes in step S203), it is determined whether or not a request item of the previous sample of the dilution container N includes the test item set as the avoidance information (step S205).

That is, the avoidance determination unit 32 reads out information of the request item on the previous sample of the dilution container N from the dilution container usage history storage unit 35, and determines whether or not the test item corresponding to the avoidance information included in the request item of the new sample is included in the request item of the previous sample.

As a result of the determination, if the test item corresponding to the avoidance information included in the request item of the new sample is not included in the request item of the previous sample of the dilution container N (No in step S205), the avoidance determination unit 32 determines that the carryover avoidance operation for the dilution container N is unnecessary and the control unit 27 controls the sample dispensing mechanism 14 to dispense the new sample to the dilution container N (step S206).

Meanwhile, as a result of the determination, if the test item corresponding to the avoidance information included in the request item of the new sample is included in the request item of the previous sample of the dilution container N (Yes in step S205), it is confirmed which of "strong positive" and "every time" in the avoidance condition 43 of the carryover avoidance setting screen 33 is selected for the test item corresponding to the avoidance information which is common to the request items of the previous sample and the new sample of the dilution container N (step S207).

That is, the avoidance determination unit 32 confirms which of "strong positive" and "every time" in the avoidance condition 43 of the test item corresponding to the avoidance information, which is common to the request items of the previous sample and the new sample of the dilution container N is selected in the avoidance information storage unit 34.

As a result of the confirmation, if one of the test items corresponding to the avoidance information includes "every time" selected as the avoidance condition (in the case of "every time" in step S207), the avoidance determination unit 32 determines that the carryover avoidance operation for the dilution container N is necessary and generates the avoidance command for the control unit 27. In addition, the control unit 27 controls the sample dispensing mechanism 14 to defer the dispensing of the new sample to the dilution container N (step S208). That is, in the present cycle, the sample dispensing mechanism 14 does not suck the new sample, and a dilution sample of the new sample is not prepared.

Meanwhile, as a result of the confirmation, if "strong positive" is selected as the avoidance condition for all the test items corresponding to the avoidance information (in the case of "strong positive" in step S207), it is determined whether or not an analysis result value of the previous sample of the dilution container N is strongly positive for all the test items corresponding to the avoidance information, which is common to the request items of the previous sample and the new sample of the dilution container N (step S209).

That is, the avoidance determination unit 32 reads out, from the analysis result storage unit 37, analysis result values of all the test items corresponding to the avoidance information, which are common to the request items of the previous sample and the new sample regarding the previous sample of the dilution container N, and determines whether or not even one of the analysis result values includes the analysis result value that exceeds the threshold 42 set as the avoidance information on the carryover avoidance setting screen 33.

As a result of the determination, if the analysis result values of all the test items corresponding to the avoidance information of the previous sample of the dilution container N do not exceed the threshold 42 (No in step S209), the avoidance determination unit 32 determines that the carryover avoidance operation for the dilution container N is unnecessary because the previous sample of the dilution container N is not a strong positive sample and the control unit 27 controls the sample dispensing mechanism 14 to dispense the new sample to the dilution container N (step S210).

Meanwhile, as a result of the determination, if any of the analysis result values of the test items corresponding to the avoidance information of the previous sample of the dilution container N exceeds the threshold 42 (Yes in step S209), the avoidance determination unit 32 determines that the carryover avoidance operation for the dilution container N is necessary because the previous sample of the dilution container N is the strong positive sample and generates the avoidance command for the control unit 27. In addition, the control unit 27 controls the sample dispensing mechanism 14 to defer the dispensing of the new sample to the dilution container N (step S208). That is, in the present cycle, the sample dispensing mechanism 14 does not suck the new sample, and a dilution sample of the new sample is not prepared.

In the case where the dispensing of the new sample to the dilution container N has been deferred in step S208, it is determined whether or not the carryover avoidance operation is performed for a dilution container (N+1) transferred to the discharge position of the sample dispensing mechanism 14 in a next cycle in the same manner as in steps S205 to S210.

Further, the dilution container N for which the dispensing of the new sample is deferred in step S208 continues to move along with the rotation of the dilution turntable 9 while remaining empty, and is cleaned by the dilution container cleaning mechanism 20 after a predetermined time has passed and a turn comes.

In addition, in step S209, in the case in which the analysis result value of the previous sample of the dilution container N has not been yet calculated, since the avoidance determination unit 32 cannot determine whether or not the previous sample of the dilution container N is the strong positive sample, the control unit 27 controls the sample dispensing mechanism 14 to dispense the new sample to the dilution container N. At this time, the control unit 27 also controls the display unit 30 to display an alarm for indicating the user that the analysis result value of the new sample dispensed to the dilution container N may be affected by the carryover from the previous sample. The control unit 27 may assign a flag for indicating the above-mentioned content to the user to the analysis result value of the new sample.

According to the second embodiment described above, the test item set as the avoidance information on the carryover avoidance setting screen 33 is the sample of the request item, or the sample for which the test item is requested to be analyzed is not dispensed for the dilution container 8 to which the sample determined to be strongly positive for the test item is dispensed, and the carryover through the dilution container 8 is avoided. In addition, the previous sample which is not used for analysis and remains of the dilution container 8 in which the avoidance command is generated is cleaned by the dilution container cleaning mechanism 20, and the dilution container 8 is cleaned again by the dilution container cleaning mechanism 20 after the dispensing of the new sample is deferred and the dilution container 8 is moved on the dilution turntable 9 while remaining empty, thereby cleaning the dilution container 8 twice in total, and therefore, the previous sample remaining in the dilution container 8 is sufficiently cleaned.

### <Third Embodiment>

As a modified example of the first embodiment and the second embodiment, the avoidance determination unit 32 determines whether the carryover avoidance operation is necessary for the dilution container 8 for which the sample dispensing nozzle is to dispense the new sample based on the avoidance information, and as a result, the avoidance command is generated, and when the dispensing of the new sample to the dilution container 8 is deferred, a special cleaning liquid having high cleaning ability is dispensed to the dilution container 8 to perform a special cleaning.

FIGS. 7A and 7B are views showing display examples of a carryover avoidance setting screen 33 according to a third embodiment of the present invention, where FIG. 7A is a modified example of the carryover avoidance setting screen 33 according to the first embodiment and FIG. 7B is a modified example of the carryover avoidance setting screen 33 according to the second embodiment.

The cleaning liquid number 44 shown in FIG. 7A and FIG. 7B is configured such that the number associated with the type of cleaning liquid that can be supplied by the cleaning liquid supply unit 24 is input. The type of cleaning liquid selected here is the type of special cleaning liquid used in the special cleaning performed for the dilution container 8 for which the dispensing of the new sample is deferred. In the present specification, as an example, the cleaning liquid number 1 is associated with an alkaline detergent, and the cleaning liquid number 2 is associated with an acid detergent.

An operation when the special cleaning is performed for the dilution container 8 for which the dispensing of the new sample is deferred will be hereinafter described.

After the avoidance determination unit 32 generates the avoidance command for the dilution container N transferred to the discharge position of the sample dispensing mechanism 14 (step S105 in the first embodiment and step S208 in the second embodiment), first, the special cleaning liquid based on the avoidance information set on the carryover avoidance setting screen 33 is supplied from the cleaning liquid supply unit 24.

That is, the control unit 27 controls the cleaning liquid supply unit 24 (the cleaning liquid supply unit 24a in the case of the example shown in a condition number 1 of FIGS. 7A and 7B, and the cleaning liquid supply unit 24b in the case of the example shown in a condition number 2 of FIG. 7B) so that the special cleaning liquid (the alkaline detergent in the case of the example shown in the condition number 1 of FIGS. 7A and 7B, and the acid detergent in the case of the example shown in the condition number 2 of FIG. 7B) associated with the set cleaning liquid number 44 is spouted.

Next, the special cleaning liquid based on the avoidance information is dispensed by the sample dispensing nozzle to the dilution container N in which the avoidance command is generated from the cleaning liquid supply unit 24. That is, the control unit 27 controls the sample dispensing mechanism 14 so that the sample dispensing nozzle sucks the special cleaning liquid from the cleaning liquid supply unit 24 from which the special cleaning liquid based on the avoidance information is spouted and then discharges the sucked special cleaning liquid to the dilution container N transferred to the discharge position by the rotation of the dilution turntable 9 and having the avoidance command generated therein.

In addition, as described in the first and second embodiments, next, it is determined whether or not the carryover avoidance operation is necessary for a dilution container N+1 transferred to the discharge position of the sample dispensing mechanism 14.

According to the third embodiment described above, it is possible not only to avoid the carryover through the dilution container 8 but also to sufficiently clean the diluted previous sample remaining in the dilution container 8 in which the avoidance command is generated.

Further, when a plurality of samples dispensed before and after to the dilution container 8 in which it is determined whether or not the carryover avoidance operation is necessary apply to the condition that requires the avoidance of the carryover set on the carryover avoidance setting screen 33, and the kind of special cleaning liquid corresponding to each condition is different, the dilution container 8 is cleaned with all selected special cleaning liquids.

For example, when the sample materials and request items of the samples to be dispensed before and after to the dilution container 8 in which it is determined whether or not the carryover avoidance operation is necessary correspond to the condition number 1 in FIG. 7A and all the condition numbers 1 and 2 in FIG. 7B, the cleaning liquid number corresponding to each condition is 1 or 2 and the type of the corresponding special cleaning solution is different.

For this reason, in such a case, according to the above-described operation, the alkaline detergent associated with the cleaning liquid number 1 is first dispensed to the dilution container 8 in which the dispensing of the new sample is deferred. In addition, the dilution container 8 to which the alkaline detergent is dispensed continues to move along with the rotation of the dilution turntable 9, and is cleaned by the dilution container cleaning mechanism 20 after a predetermined time has passed and a turn comes.

Thereafter, when the dilution container 8 is next transferred to the discharge position of the sample dispensing mechanism 14, the acid detergent associated with the cleaning liquid number 2 is dispensed to the dilution container 8. In addition, in the same manner as when the alkaline detergent is dispensed, the dilution container 8 is cleaned by the dilution container cleaning mechanism 20 after a predetermined time is elapsed. However, the order of the types of special cleaning liquids to be dispensed to the dilution container 8 does not matter.

### <Fourth Embodiment>

As a modified example of the third embodiment, an automatic analyzer 1 according to a fourth embodiment includes a carryover avoidance setting screen 33 in which a special cleaning liquid can be set as avoidance information, and a dilution container cleaning history storage unit 38 for storing information on the type of cleaning liquid dispensed in the past to the dilution container 8, and when the avoidance determination unit 32 determines whether or not the carryover avoidance operation is necessary for the dilution container 8 for which the sample dispensing nozzle is to dispense the new sample, the avoidance determination unit 32 performs the determination in consideration of cleaning history information on the dilution container 8 after the previous sample is dispensed.

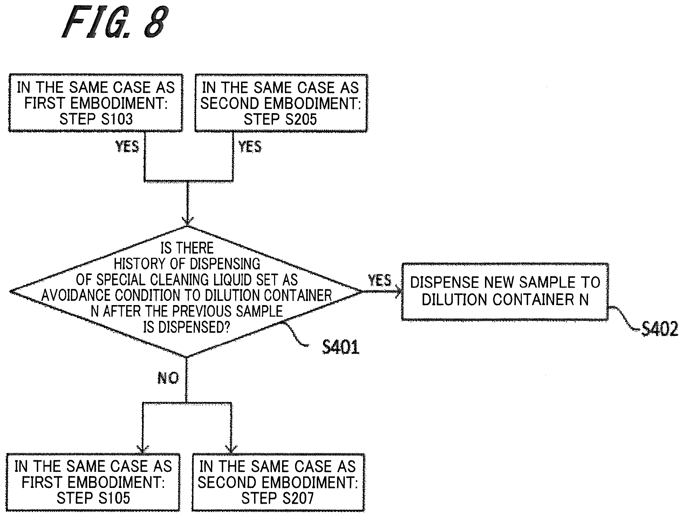

FIG. 8 is a part of a flowchart for describing an operation when a carryover through the dilution container 8 is avoided in consideration of the cleaning history information of the dilution container 8 according to the fourth embodiment of the present invention, and shows an operation when it is determined whether or not the carryover avoidance operation is necessary based on the types of sample materials of the samples dispensed before and after to the dilution container 8 in which the sample dispensing nozzle is to dispense the sample and the avoidance information (the same case as the first embodiment), and an operation when it is determined whether or not the carryover avoidance operation is necessary based on the types of request items of the samples dispensed before and after in the same manner and the avoidance information (the same case as the second embodiment).

Further, in the same case as the first embodiment, the operations up to step S104 in the first embodiment are common operations, in the same case as the second embodiment, the operations up to step S206 of the second embodiment are common operations, and the description of the operation steps in FIG. 8 and the description in the present specification regarding the operations overlapping with the embodiments described above, respectively, will be omitted.

An operation when the carryover through the dilution container 8 is avoided in consideration of the cleaning history information of the dilution container 8 will be hereinafter described along with each step shown in FIG. 8.

After it is determined that the combination of sample materials of the samples dispensed before and after to the dilution container N in which the sample dispensing nozzle is to dispense the new sample corresponds to the avoidance information (Yes in step S103 of FIG. 3) in the same case as the first embodiment, and after it is determined that the request item of the previous sample of the dilution container N in which the sample dispensing nozzle is to dispense the new sample includes the test item corresponding to the avoidance information included in the request item of the new sample (Yes in step S205 of FIG. 8) in the same case as the second embodiment, it is determined whether or not the special cleaning liquid set as the avoidance information is dispensed to the dilution container N after the previous sample is dispensed (step S401) .

That is, the avoidance determination unit 32 reads out the cleaning history information of the dilution container N from the dilution container cleaning history storage unit 38, and determines whether or not a history in which the special cleaning liquid set as the avoidance information on the carryover avoidance setting screen 33 is dispensed to the dilution container N after the previous sample is dispensed exists in the read history information.

As a result of the determination, if the history in which the special cleaning liquid set as the avoidance information is dispensed to the dilution container N after the previous sample is dispensed exists (Yes in step S401), the avoidance determination unit 32 determines that the carryover avoidance operation for the dilution container N is unnecessary because the dilution container N is sufficiently cleaned, and the control unit 27 controls the sample dispensing mechanism 14 to dispense the new sample to the dilution container N (step S402) .

The above steps S401 and S402 are common operations in the same case as the first embodiment and the same case as the second embodiment.

Meanwhile, as a result of the determination, if the history in which the special cleaning liquid set as the avoidance information is dispensed to the dilution container N after the previous sample is dispensed does not exist (No in step S401), the avoidance determination unit 32 determines that the carryover avoidance operation for the dilution container N is necessary and generates an avoidance command to the control unit 27 in the same case as the first embodiment. In addition, the control unit 27 controls the sample dispensing mechanism 14 to defer the dispensing of the new sample to the dilution container N (step S105 of FIG. 3) . That is, in the present cycle, the sample dispensing mechanism 14 does not suck the new sample, and a dilution sample of the new sample is not prepared.

Similarly, in the same case as the second embodiment, next, it is confirmed which of "strong positive" and "every time" is selected as the avoidance condition 43 of the carryover avoidance setting screen 33 for the test item corresponding to the avoidance information, which is common to the request items of the previous sample and the new sample of the dilution container N (step S207 of FIG. 5), and the subsequent operations follow steps S207 to S210 of the second embodiment.

According to the fourth embodiment described above, for example, in the case in which maintenance work including the cleaning of the dilution container 8 is performed after the previous sample is dispensed and analyzed in the dilution container 8 in which the sample dispensing nozzle is to dispense the new sample, and the dilution container 8 is sufficiently cleaned, even if the previous sample and the new sample correspond to the avoidance information, there is no need to wastefully defer the dispensing of the new sample to the dilution container 8.

### Reference Signs List

- 1: automatic analyzer
- 2: measurement mechanism
- 3: control mechanism
- 4: reaction container
- 5: reaction turntable
- 6: sample container
- 7: sample turntable
- 8: dilution container
- 9: dilution turntable
- 11: first reagent turntable
- 13: second reagent turntable
- 14: sample dispensing mechanism
- 17: dilution sample dispensing mechanism
- 20: dilution container cleaning mechanism
- 21: dispensing nozzle cleaning mechanism
- 27: control unit
- 28: input unit
- 29: sample concentration calculation unit
- 30: display unit
- 31: storage unit
- 32: avoidance determination unit
- 33: carryover avoidance setting screen between samples
- 34: avoidance information storage unit
- 35: dilution container usage history storage unit
- 36: analysis request information storage unit
- 37: analysis result storage unit
- 38: dilution container cleaning history storage unit

## Claims

1. An automatic analyzer 1 including
a sample table (7) configured to hold a plurality of sample containers (6) containing a sample,
a pretreatment table (9) configured to hold a plurality of pretreatment containers (8) containing a pretreatment sample obtained by subjecting the sample to pretreatment,
a reaction table (5) configured to hold a plurality of reaction containers (4) in which the pretreatment sample and a reagent are reacted,
reagent tables (11 and 13) configured to hold a plurality of reagent containers (10 and 12) containing the reagent,
a sample dispensing nozzle configured to transfer the sample from the sample container (6) held by the sample table (7) to the pretreatment container (8) held by the pretreatment table (9),
a pretreatment sample dispensing nozzle configured to transfer the pretreatment sample from the pretreatment container (8) held by the pretreatment table (9) to the reaction container (4) held by the reaction table (5), and
a reagent dispensing nozzle configured to transfer the reagent from the reagent tables (11 and 13) to the reaction tables (4), and
subjecting the sample to pretreatment in the pretreatment container (8) and reacting the obtained pretreatment sample with the reagent in the reaction container (4) to analyze components in the sample, the automatic analyzer 1 comprising:
an avoidance information storage unit (34) configured to store avoidance information including a condition requiring carryover avoidance for the pretreatment container (8);
a pretreatment container usage history storage unit (35) configured to store information including the type of sample material and the type of test item requested to be analyzed, regarding a sample dispensed in the past to the pretreatment container (8);
an analysis request information storage unit 36 configured to store information including the type of sample material and the type of test item requested to be analyzed, regarding a sample newly requested to be analyzed;
an avoidance determination unit (32) configured to determine whether or not the avoidance is necessary, based on information of samples dispensed before and after to the pretreatment container (8) in which the sample dispensing nozzle is to dispense the sample, stored in the pretreatment container usage history storage unit (35) and the analysis request information storage unit (36), and the avoidance information to generate a command; and
an avoidance control unit (27) configured to control the sample dispensing nozzle so that the sample dispensing nozzle defers the dispensing of the sample to the pretreatment container (8), based on the avoidance command from the avoidance determination unit (32).

2. The automatic analyzer (1) according to claim 1, wherein
the avoidance information storage unit (34) stores a combination of types of sample material as a condition requiring carryover avoidance of the avoidance information, and
the avoidance determination unit (32) determines whether or not the avoidance is necessary, based on the types of sample materials of the samples dispensed before and after to the pretreatment container (8) in which the sample dispensing nozzle is to dispense the sample, stored in the pretreatment container usage history storage unit (35) and the analysis request information storage unit (36), and the avoidance information to generate an avoidance command.

3. The automatic analyzer (1) according to claim 1, wherein
the avoidance information storage unit (34) stores the type of test item as the condition requiring the carryover avoidance of the avoidance information, and
the avoidance determination unit (32) determines whether or not the avoidance is necessary, based on the types of test items requested to be analyzed for samples dispensed before and after to the pretreatment container (8) in which the sample dispensing nozzle is to dispense the sample, stored in the pretreatment container usage history storage unit (35) and the analysis request information storage unit (36), and the avoidance information to generate an avoidance command.

4. The automatic analyzer (1) according to claim 3, further comprising
an analysis result storage unit (37) configured to store a concentration of the test item included in the sample as an analysis result, wherein
the avoidance information storage unit (34) stores a threshold used for determining whether or not the carryover affects for each of the stored test items as the condition requiring the carryover avoidance of the avoidance information, and
the avoidance determination unit (32) determines whether or not the avoidance is necessary by comparing an analysis result of the sample dispensed before to the pretreatment container (8)regarding a common test item requested to be analyzed for the samples dispensed before and after to the pretreatment container (8) in which the sample dispensing nozzle is to dispense the sample, stored in the pretreatment container usage history storage unit (35) and the analysis request information storage unit (36) with the threshold of the test item stored in the avoidance information storage unit (34) to generate the avoidance command.

5. The automatic analyzer (1) according to any one of claims 1 to 4, further comprising
cleaning liquid supply units (24a and 24b) configured to be disposed so as to be sucked by the sample dispensing nozzle and supply a cleaning liquid, wherein
the avoidance information storage unit (34) adds and stores information on the type of cleaning liquid to each of the avoidance information, and
when the information on the samples dispensed before and after to the pretreatment container (8) in which the sample dispensing nozzle is to dispense the sample corresponds to the avoidance information, the avoidance control unit (27) controls the cleaning liquid supply units (24a and 24b) and the sample dispensing nozzle so that the sample dispensing nozzle dispenses the cleaning liquid based on the avoidance information stored in the avoidance information storage unit (34) from the cleaning liquid supply unit (24a and 24b) to the pretreatment container (8) in which the avoidance determination unit (32) generates the avoidance command.

6. The automatic analyzer (1) according to claim 5, further comprising
a pretreatment container cleaning history storage unit 38 configured to store information on the type of cleaning liquid dispensed in the past to the pretreatment container (8), wherein
when the information on the samples dispensed before and after to the pretreatment container (8) in which the sample dispensing nozzle is to dispense the sample corresponds to the avoidance information, the avoidance determination unit 32 determines that there is no need for avoidance in a case where a history in which the cleaning liquid stored in the avoidance information of the avoidance information storage unit (34) is dispensed after the sample is previously dispensed to the pretreatment container (8) exists in the past cleaning history of the pretreatment container (8) stored in the pretreatment container cleaning history storage unit (38), and does not generate the avoidance command.
